**Europäisches Patentamt**

**European Patent Office**

**Office européen des brevets**

(19)

(11) Veröffentlichungsnummer : **0 188 639 B1**

# EUROPÄISCHE PATENTSCHRIFT

(12)

(45) Veröffentlichungstag der Patentschrift :
30.09.87

(51) Int. Cl.⁴ : **A 47 G 27/04**

(21) Anmeldenummer : **85100588.4**

(22) Anmeldetag : **21.01.85**

(54) **Befestigungseinrichtung für Autoteppiche, Fussmatten oder dgl. in Kraftfahrzeugen.**

(43) Veröffentlichungstag der Anmeldung :
**30.07.86 Patentblatt 86/31**

(45) Bekanntmachung des Hinweises auf die Patenterteilung : **30.09.87 Patentblatt 87/40**

(84) Benannte Vertragsstaaten :
**AT BE CH DE FR GB IT LI NL**

(56) Entgegenhaltungen :
**DE-A- 2 200 009**
**FR-A- 855 639**
**GB-A- 831 384**
**US-A- 1 872 001**
**US-A- 2 084 558**
**US-A- 2 740 179**

(73) Patentinhaber : **Hermann, Otto Wilhelm**
**Alsinetta S/N**
**Begas Barcelona (ES)**

(72) Erfinder : **Hermann, Otto Wilhelm**
**Alsinetta S/N**
**Begas Barcelona (ES)**

(74) Vertreter : **Patentanwälte Dipl.-Ing. Rudolf Bibrach**
**Dipl.-Ing. Elmar Rehberg**
**Postfach 1453 Pütterweg 6**
**D-3400 Göttingen (DE)**

EP 0 188 639 B1

**Beschreibung**

Die Erfindung bezieht sich auf eine Befestigungseinrichtung für Autoteppiche, Fußmatten oder dgl. in Kraftfahrzeugen, mit einem in dem Bodenbelag zu verankernden Fixierelement, welches einen zentral angeordneten, mit einer Hinterschneidung versehenen Zapfen aufweist, und mit einem drehbaren Verschlußteil, welches einen Fortsatz aufweist, der mit der Hinterschneidung des Zapfens des Fixierelementes zusammenwirkt. Derartige Befestigungseinrichtungen dienen dazu, Autoteppichstücke oder Fußmatten auf dem Bodenbelag, mit dem das Fahrzeug mehr oder weniger ganzflächig ausgelegt ist, verrutschsicher zu fixieren. Andererseits muß die Möglichkeit geschaffen sein, den Autoteppich, die Fußmatte oder dgl. auch von der fixierten Stelle am Bodenbelag lösen zu können, um die Fußmatte auszulehren oder den Autoteppich zu reinigen.

Eine Befestigungseinrichtung der eingangs beschriebenen Art ist aus dem DE-U-8228 883 bekannt. Dabei wird als Fixierelement ein Schraubelement, also eine Schraube, benutzt, die in ihrem oberen Bereich mit einer Platte versehen ist, die sich nach dem Einschrauben gegen den Bodenbelag anlegt. Die Schraube muß ein gewisse Länge aufweisen, so daß sie nicht nur den Bodenbelag, sondern auch noch das darunter befindliche Isoliermaterial durchdringt, um den erforderlichen Halt zu ermöglichen. Mit der Platte des Schraubelementes ist eine weitere Platte darauf verbunden, die auf ihrer Oberseite einen Zapfen mit einer Hinterschneidung trägt. Der Zapfen besitzt jedoch keinen runden, sondern einen ovalen oder elyptischen Umriß. Ein Verschlußteil ist in dem Zapfen drehbar, jedoch unlösbar gelagert, welches einen dem Umriß des Zapfens angepaßten ovalen bzw. elyptischen Umriß aufweist, so daß der Verschlußteil in der eine Relativlage sich umrißmäßig mit dem Umriß des Zapfens deckt, während er in der um 90° gedrehten Stellung seine Verschlußposition einnimmt. Es versteht sich, daß der betreffende Autoteppich mit einem entsprechend elyptisch bzw. oval ausgestattetem Loch versehen sein muß, welches eine Randeinfassung trägt. Die Randeinfassung besteht aus einer metallenen Ringöse entsprechender Formgebung. Nachteilig an diesem Befestigungselement ist es, daß die beiden Platten vergleichsweise dick auftragen, so daß die Befestigungsstelle des Autoteppichs nach oben aufgewölbt erscheint. Auch ist es erforderlich, daß Einschrauben des Fixierelemtes mit einer halben Umdrehung lagegenau zu der Durchbrechung des Teppichbodens zu beenden, damit sich die Ringöse des Autoteppichs auf den ovalen Zapfen des Fixierelemtes aufsetzen läßt. Dies führt oft dazu, daß der Sitz des eingeschraubten Fixierelemtes um einen Teilbetrag einer halben Drehung verändert werden muß, was den festen Halt des Fixierelemtes in dem Bodenbelag nicht förderlich ist. Weiterhin ist das Anbringen der Ringösen nur herstellerseits möglich, wobei es erforderlich ist, den Anbringungsort festzulegen. Oft besteht aber der Wunsch, vom Autobesitzer selbst den individuellen Anbringungsort der Befestigungseinrichtung festzulegen.

Aus der EP-A-58252 ist ein einteiliger Befestigungsknopf für Fußmatten bekannt, der mit einem Kopfteil zum Aufknüpfen der Fußmatte versehen ist. Der Befestigungsknopf ist mit einer Fläche für den Ansatz eines Verdrehwerkzeuges ausgestattet und besitzt einen im wesentlichen zylindrischen Schaft, so daß auch die Öffnung in der Fußmatte runden Querschnitt aufweist und somit eine winkelgetreue Relativlage zwischen den Teilen nicht eingehalten werden muß. Der Befestigungsknopf besitzt einen mit Gewinde versehenen Fußteil, wobei zwischen Kopfteil und Fußteil ein Auflagerand vorgesehen ist. Der Fußteil trägt ein Schneidgewinde großer Steigung mit vom Einschraubende her über die ganze Länge wachsenden Kerndurchmesser und zunehmenden Radius des Gewindeganges. Der Gewindegang endet offen zum Auflagerand, so daß eine Weiterdrehung des Befestigungsknopfes seinen festen Sitz nicht beeinträchtigt.

Der Erfindung liegt die Aufgabe zugrunde, eine Befestigungseinrichtung der eingangs beschriebenen Art derart weiterzubilden, daß eine individuelle Verankerung des Autoteppichs, einer Fußmatte oder dgl. mit festem Halt des Fixierelemtes unabhängig von dessen Verdrehwinkel möglich ist und der eine einfache Handhabung gestattet.

Erfindungsgemäß wird dies dadurch erreicht, daß das Fixierelement aus einem dünnwandigen Blechformteil besteht, welches mindestens zwei mit Widerhaken besetzte Einschraubflügel und am Zapfen eine schlitzartige Öffnung für den Fortsatz aufweist, und das der Verschlußteil vermittels des knebelartig ausgebildeten Fortsatzes mit dem Fixierelement verbindbar bzw. von diesem lösbar ausgebildet ist. Durch die Ausbildung des Fixierelementes aus einem dünnwandigen Blechformteil wird dessen Herstellung und Anwendung erheblich verbessert. Die vergleichsweise geringe Wandstärke des Fixierelementes trägt kaum auf, so daß eine Aufwölbung des Autoteppichs nach oben an der Befestigungsstelle nicht eintritt. Durch die auf Abstand angeordneten Einschraubflügel wird eine sichere Abstützung des Fixierelementes an dem Bodenbelag erreicht, d. h. das Fixierelement wird an mindestens zwei Punkten gehalten und ist somit gegen Kippen gesichert. Der Einschraubvorgang des Fixierelementes kann in jeder Winkellage beendet werden, weil der Zapfen einen runden Umriß aufweist und somit die Verbindung zu dem Autoteppich in jeder Winkellage möglich ist. Die Widerhaken verhindern ein Losdrehen des Fixierelementes. Die schlitzartige Öffnung am Zapfen des Fixierelementes gestattet das Lösen bzw. Verbinden des Verschlußteils mit dem Fixierelement. Dies ist in soweit besonders vorteilhaft, als damit die Möglichkeit gegeben ist, daß der Verschlußteil mit einem Abdeckkragen die Durchbrechung im Autoteppich großflächig überdeckt, daß der Autoteppich einerseits verläßlich gehalten ist, andererseits sich Ungleichmäßigkeiten bei dem Einschneiden der Durchbrechung im Autoteppich sich nicht nachteilig in dekorativer Hinsicht bemerkbar machen können. Die leichte Lösbarkeit des Verschlußteils von dem Fixierteil gestattet es, nach dem Lösen des Verschlußteils die Fußmatte leicht nach oben abzuheben. Es entfällt ein Losknöpfen von einem Befestigungsknopf. Andererseits trägt aber der Abdeckkragen des Verschlußteils und die an ihm einwirkende Reibung zuverlässig dazu bei, daß der Verschlußteil an dem Fixierelement ordnungsgemäß gehalten wird. Nur durch ein bewußtes Verdrehen des Verschlußteils kann dieses gelöst werden.

Das Fixierelement weist im Anschluß an den Zapfen einen abstehenden Kragen auf, an dem die Einschraubflügel eingeschnitten und aus der Ebene des Kragens nach der dem Kragen abgekehrten Seite abgebogen angeordnet sind. Auf diese Art und Weise werden sehr einfach. Die Einschraubflügel und damit die Fixierpunkte für das Fixierelement gebildet, ohne das eine komplizierte Formgebung erforderlich ist. Die Fixierpunkte sind im Abstand voneinander angeordnet, so daß das Fixierelement mindestens an zwei Punkten, die auf Abstand angeordnet sind, gehalten ist, während beim Stand der Technik jedes Fixierelement nur durch einen einzigen Punkt gehalten wird. Damit wird das Fixierelement in seiner Ebene parallel zu dem Bodenbelag festgelegt und kann auch nicht kippen. Die Einschraubflügel können sichelförmige, in Einschraubrichtung spitz zulaufende Form aufweisen, während die Widerhaken aus der Ebene der Einschraubflügel abgebogen sind. Es versteht sich, daß die Widerhaken entgegengesetzt zu der Spitze der Einschraubflügel gerichtet angeordnet sind. Die Einschraubflügel und die Widerhaken enden in ihren Spitzen in einer Ebene, die parallel zu dem abstehenden Kragen angeordnet ist, so daß durch diese vier Punkte zugleich die ordnungsgemäße Anfangslage des Fixierelementes parallel zu dem Bodenbelag festgelegt ist. Damit ist gewährleistet, daß der Einschraubvorgang so abläuft, daß das Fixierelement sich rotierend parallel zum Bodenbelag bewegt.

Der Zapfen des Fixierelementes kann auf seiner Oberseite einen parallel zum Kragen angeordneten Verankerungsrand aufweisen, in dem die schlitzartige Öffnung angeordnet ist. Diese Formgebung gestattet die Herstellung des Fixierelementes als Blechformteil durch Tiefziehen. Gleichzeitig bildet der Verankerungsrand die erforderliche Hinterschneidung für den knebelartigen Fortsatz des Verschlußteils.

Der Verschlußteil weist ansonsten einen Abdeckkragen auf, der kreisförmig begrenzt ist und dessen Durchmesser etwa dem Durchmesser des Kragens des Fixierelementes entspricht. Auf diese Art und Weise arbeite der Kragen des Fixierelementes und der Abdeckkragen des Verschlußteiles zusammen, wobei der Autoteppich, die Fußmatte oder dgl. dazwischen aufgenommen wird. Der Verschlußteil kann im Mittelbereich seines Abdeckkragens verdickt ausgebildet sein, wobei dort ein Schlitz oder eine Rippe vorgesehen sein können. Der Schlitz gestattet es, den Verschlußteil beispielsweise mit einer Münze aus der Fixierstellung in die Lösestellung und umgekehrt zu verdrehen. Die Anordnung des Schlitzes hat den Vorteil, daß der Verschlußteil nach oben nicht weiter aufträgt. Es ist dabei auch möglich, eine Rippe oder dgl. vorzusehen, die nach oben übersteht, so daß der Verschlußteil dort unmittelbar zwischen zwei Fingern ergriffen und verdreht werden kann.

Der Abdeckkragen kann hutförmig eingewölbt und federnd nachgiebig ausgebildet sein, damit einerseits unterschiedlich dicke Autoteppiche bzw. Fußmatten aufgenommen werden können und andererseits die erforderliche Reibungskraft von dem Autoteppich selbst auf den Abdeckkragen übertragen wird, so daß ein ein selbstätiges Verdrehen des Verschlußteils aus der Fixierstellung nicht möglich ist.

In Weiterbildung der Erfindung können zwischen dem Fixierelement und dem Verschlußteil zwei druckknopfartig miteinander verrastbare Einfaßteile vorgesehen sein, die zwischen sich den Bodenbelag oder die Fußmatte aufnehmen. Dabei sind die beiden Einfaßteile zentrisch mit je einer Durchbrechung für den Zapfen des Fixierelementes und den Fortsatz des Verschlußteils versehen. Diese Ausbildung ermöglicht es, die Durchbrechung im Autoteppich gleichsam einzufassen, indem die beiden Einfaßteile von oben und von unten durch die Durchbrechung gesteckt und miteinander verrastet werden. Selbstverständlich sind die beiden Einfaßteile und das Fixierelement sowie der Verschlußteil in ihren geometrischen Abmessungen aufeinander abgestimmt. Die Einfaßteile können federnd nachgiebige Halteränder aufweisen, so daß auf diese Art und Weise Toleranzen in der Dicke des Autoteppichs ausgeglichen werden können. Auch die Einfaßteile können als Kunststoffspritzteile ausgebildet sein, so daß sie besonders einfach und preiswert herstellbar sind.

Die Erfindung wird anhand einiger Ausführungsbeispiele weiter verdeutlicht und beschrieben. Es zeigen :

Figur 1 eine teilweise geschnittene Seitenansicht des Fixierelementes in einer ersten Ausführungsform,

Figur 2 eine Draufsicht auf das Fixierelement gemäß Fig. 1,

Figur 3 eine Draufsicht auf den Verschlußteil in einer ersten Ausführungsform,

Figur 4 einen Schnitt gemäß der Linie IV-IV in Fig. 3,

Figur 5 einen Schnitt gemäß der Linie V-V in Fig. 3,

Figur 6 einen Schnitt durch die Befestigungseinrichtung im Bereich eines Autoteppichs am Kraftfahrzeugboden,

Figur 7 eine Draufsicht auf ein erstes Einfaßteil,

Figur 8   einen Schnitt gemäß der Linie VIII-VIII in Fig. 7,

Figur 9   einen Schnitt gemäß der Linie IX-IX in Fig. 7,

Figur 10   eine Draufsicht auf das andere Einfaßteil,

Figur 11   einen Schnitt gemäß der Linie XI-XI in Fig. 10,

Figur 12   einen Schnitt gemäß der Linie XII-XII in Fig. 10 und

Figur 13   eine Schnittdarstellung zweier Halbschnitte der Befestigungseinrich aus Fixierelementen, Verschlußteil und den beiden Einfaßteilen.

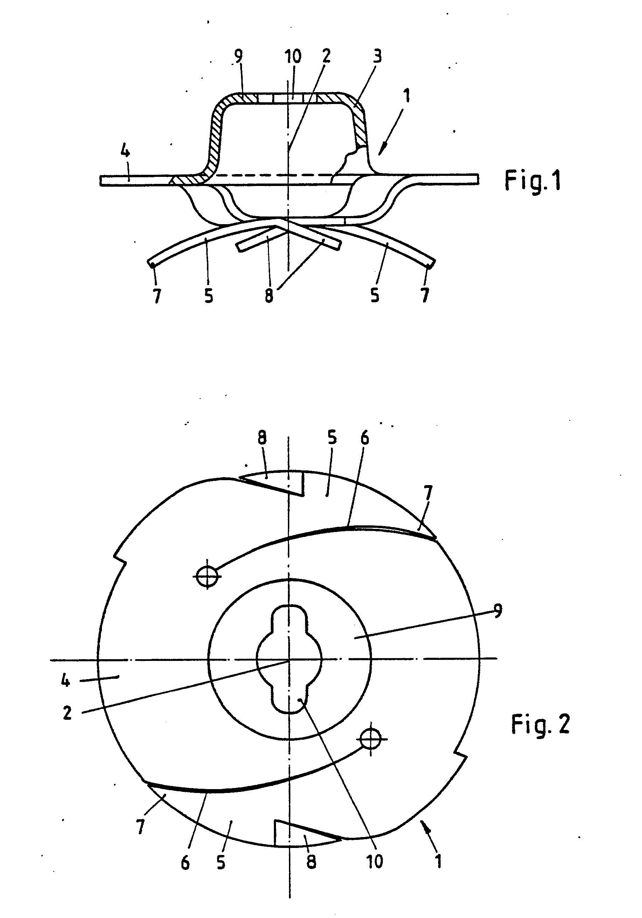

Das in Fig. 1 und 2 dargestellte Fixierelement 1 ist als dünnwandiges Blechformteil ausgebildetund wird durch einen Stanz- und Ziehvorgang hergestellt. Das Fixierelement 1 besitzt zentrisch zu seiner Vertikalachse 2 einen zylindrischen, entsprechend dem Tiefziehvorgang konischen Zapfen 3 mit etwa kreisförmigem Umriß, der durch eine Aufwölbung des Blechteiles entstanden ist. Der Zapfen 3 geht an seinem unteren Ende in einen abstehenden Kragen 4 über, der etwa kreisringförmig begrenzt ist. Im Bereich dieses Kragens 4, also im Abstand zu der Vertikalachse 2 sind an dem Kragen Einschraubflügel 5 gebildet. Im dargestellten Ausführungsbeispiel sind durch Anschnitte 6 zwei solche Einschraubflügel 5 vorgesehen. Jeder Einschraubflügel 5 besitzt in Eindrehrichtung im Rechtsdrehsinn eine Spitze 7, die sich nach unten abgebogen erstreckt, wie dies aus Fig. 1 ersichtlich ist. An jedem Einschraubflügel 5 sind entgegengesetzt zu der Einschraubrichtung abstehende Widerhaken 8 vorgesehen, die ein Zurückdrehen verhindern. Die Spitzen 7 der Einschraubflügel 5 sowie die Spitzen der Widerhaken 8 können in der gleichen Ebene enden. Auf der Oberseite des Zapfens 3 geht das Material des Fixierelementes 1 in einen Verankerungsrand 9 über, der im wesentlichen den Hohlraum des Zapfens 3 nach oben abdeckt und in dem eine langlochartige schlitzartige Öffnung 10 vorgesehen ist. Ein derartig ausgebildetes Fixierelement 1 läßt sich an der entsprechenden Fixierstelle auf dem Bodenbelag des Bodens des Kraftfahrzeuges auflegen durch eine Einschraubbewegung im Rechtsdrehsinne unter entsprechender Druckanwendung in den Bodenbelag einschrauben, wobei die Spitzen 7 der Einschraubflügel 5 in den Bodenbelag und auch teilweise in das darunter befindliche Isoliermaterial am Boden des Kraftfahrzeuges eindringen. Die Einschraubbewegung kann unter zu Hilfenahme eines Schraubenziehers erfolgen, die in die schlitzartige Öffnung 10 eingesteckt wird.

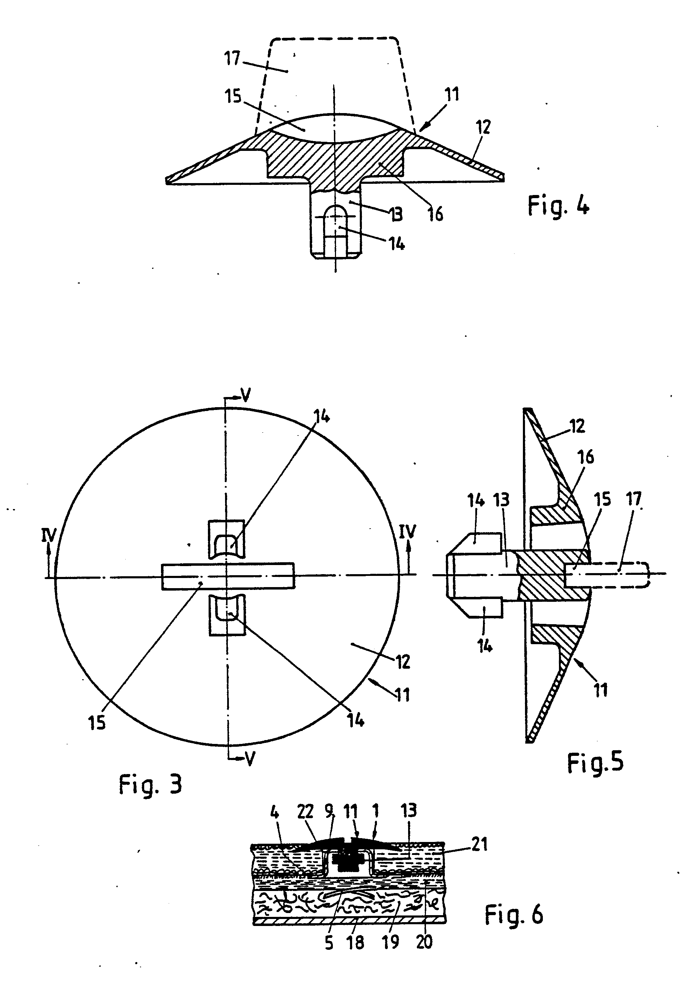

In den Figuren 3-5 ist ein Verschlußteil 11 dargestellt, welches dazu bestimmt ist, mit dem Fixierelement 1 der Fig. 1 und 2 zusammenzuarbeiten. Auch hier ist die Darstellung in einem Maßstab etwa 3 : 1 durchgeführt. Der Verschlußteil 11 besitzt einen kreisförmig begrenzten Abdeckkragen 12, an den sich nach unten ein knebelartiger Fortsatz 13 anschließt, der im Winkel von 180° gegeneinander versetzt zwei den Knebel bildende Verbreiterungen 14 aufweist. Der Umriß des Fortsatzes 13 mit den Verbreiterungen 14 ist derart ausgebildet und auf die langlochartige Durchbrechung 10 des Fixierelementes 11 abgestimmt, daß bei sich etwa deckender Stellung der Umrisse der Verschlußteil 11 von oben mit seinem Fortsatz in den Zapfen 3 eingeführt werden kann. Durch eine Verdrehbewegung um etwa 90° greifen die Verbreiterungen 14 unter den Verankerungsrand 9, der dann eine Hinterschneidung bildet. In dieser Stellung ist der Verschlußteil 11 an dem Fixierelement 1 axial gesichert gehalten. Der Verschlußteil 11 kann vorzugsweise als Kunststoffspritzteil ausgebildet sein, so daß sein Abdeckkragen 12 federnd nachgiebig ist, um Toleranzen des Autoteppichs aufnehmen zu können. Andererseits wird über diese Nachgiebigkeit die erforderliche Anpreßkraft an dem Autoteppich ausgenutzt, um durch die hierdurch entstehende Reibung eine Verdrehsicherung gegen ungewolltes Verdrehen zu erzielen. Zum bewußten Verdrehen des Verschlußteils kann ein Schlitz 15 auf der Oberseite des Verschlußteiles 11 dienen, der in einem verdicktem Mittelbereich 16 zwischen Abdeckkragen 12 und Fortsatz 13 vorgesehen ist. Der Schlitz 15 ist in seinen Abmessungen an die Abmessungen einer Münze angepaßt, so daß diese als Verdrehwerkzeug benutzt werden kann. Statt des Schlitzes 15 kann auch eine Rippe 17 vorgesehen sein, die strichpunktiert angedeutet ist. Diese Rippe 17 besitzt den Vorteil, daß sie unmittelbar ergriffen werden kann und somit ein Verdrehwerkzeug nicht erforderlich ist. Andererseits steht die Rippe 17 aber um das betreffende Maß nach oben über.

Fig. 6 zeigt in Originalgröße einen Schnitt durch den Boden eines Kraftfahrzeuges. Auf einem Bodenblech 18 ist ein Isoliermaterial 19 angebracht, auf dem sich der Bodenbelag 20 befindet, mit dem die Bodenwanne des Kraftfahrzeuges mehr oder weniger ganz ausgestattet ist. Ein Autoteppich 21 soll nun als Stück jeweils im Fußraum der Bodenwanne verrutschgesichert angeordnet werden. Hierzu wird zunächst der Autoteppich 21 an der betreffenden Fixierstelle mit einer Durchbrechung 22 versehen. Es versteht sich, daß pro Autoteppich mindestens zwei Befestigungseinrichtungen eingesetzt werden, um den Autoteppich 21 wirksam auf der Fläche zu fixieren. Nachdem der Autoteppich mit seinen beiden Durchbrechungen 22 paßgenau eingelegt ist wird zunächst an den beiden Stellen je ein Fixierelement 1 so untergeschoben, daß dessen Zapfen 4 durch die Durchbrechung 22 hindurchragt. Durch eine Drehbewegung unter Druckanwendung wird nun das jeweilige Fixierelement 1 mit seinen Einschraubflügeln 5 so eingeschraubt, bis sein Kragen 4 auf den Bodenbelag 20 aufsetzt. Dabei dringen die Einschraubflügel 5 durch den Bodenbelag hindurch und — je nach der Dicke des Bodenbelages auch noch teilweise in das Isoliermaterial 19 ein. Das Fixierelement 1 ist somit am Bodenbelag 20 fixiert gehalten und verdrehsicher gelagert. Die Widerhaken 8 verhindern ein Zurückdrehen des Fixierelementes 1. Bei dieser Montage der Fixierelemente 1 kommt es nicht darauf an, in welcher Winkelstellung der Öffnungen 10 die Eindrehbewegung beendet wird, weil der Zapfen 3 einen runden Querschnitt aufweist und so geeignet ist, die Durchbrechung 22 in jeder Winkellage aufzunehmen.

Anschließend wird das Verschlußteil 11 von oben über den Autoteppich 21 greifend aufgesetzt, wobei ebenfalls eine Druckanwendung und eine anschließende Verdrehbewegung um etwa 90° stattfinden. Dabei tritt der knebelartige Fortsatz 13 hinter die Hinterschneidung des Verankerungsrandes 9, so daß die verriegelte Stellung gesichert ist. Aus Fig. 6 ist ersichtlich, wie sich der Abdeckkragen 12 in das nachgiebige Material des Autoteppichs 21 eingräbt, so daß einerseits der erforderliche feste Sitz erreicht wird und andererseits der Verschlußteil 11 nach oben kaum übersteht. Man ersieht auch aus Fig. 6, daß das Fixierelement 1 nicht oder kaum aufträgt, weil es als dünnwandiges Blechformteil ausgebildet ist. Die Abmessung kann so gewählt werden, daß selbst die geringe Wandstärke des Fixierelementes 1 durch den zusammengepreßten Sitz zwischen Verschlußteil 11 und Fixierelement 1 ausgeglichen wird.

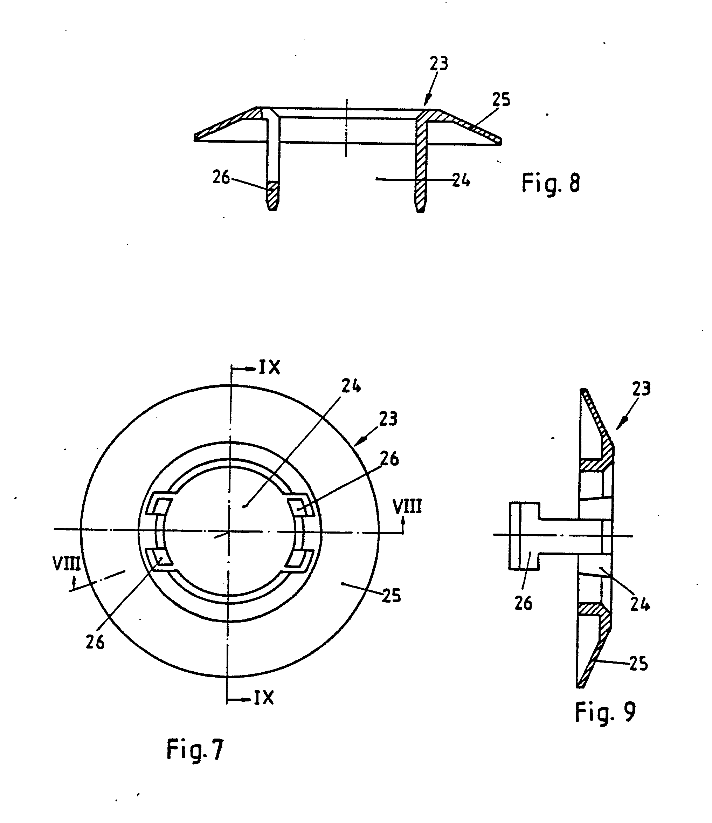

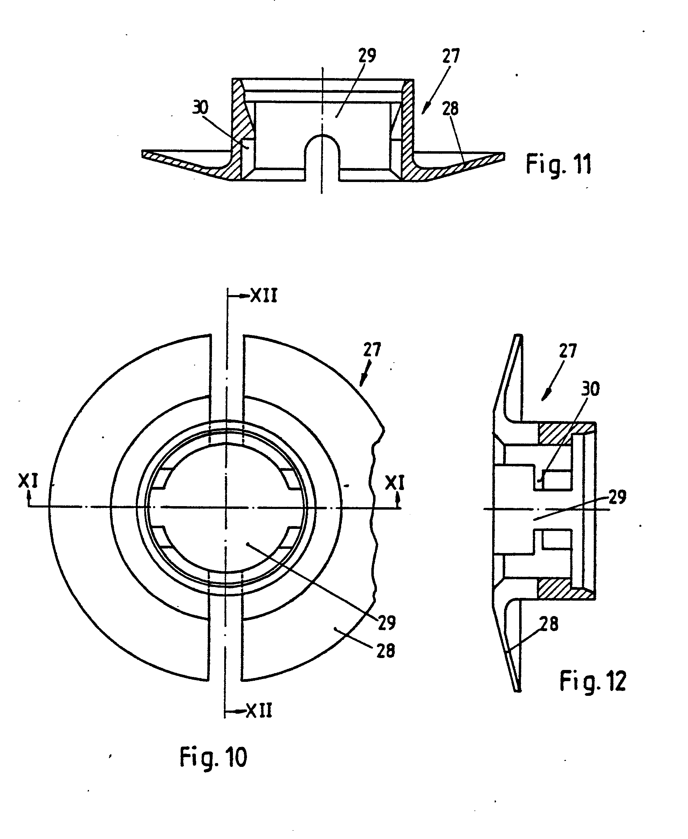

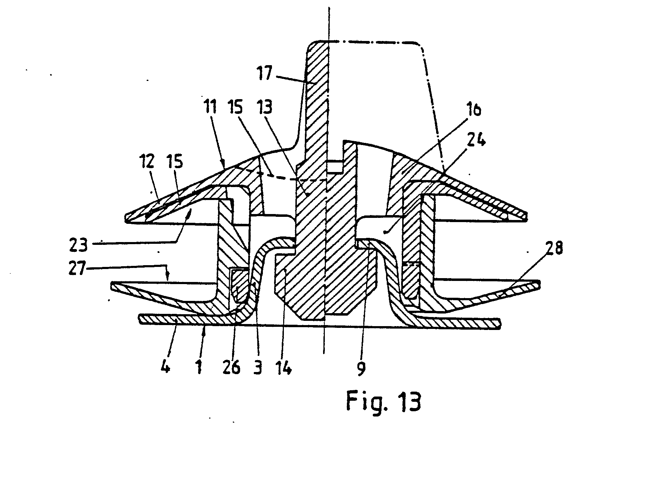

In den Figuren 7-9 ist ein erstes Einfaßteil 23, welches zentrisch mit einer Durchbrechung 24 für den Durchtritt des Zapfens 3 und des Fortsatzes 13 versehen ist. Das Einlaßteil 23 besitzt einen federnd nachgiebigen Halterand 25 und ansonsten um die Durchbrechung 24 herum druckknopfartig wirkende Verbindungsmittel 26. Die genaue Ausbildung geht aus den drei zeichnerischen Darstellungen hervor. Zu jedem ersten Einfaßteil 23 gehört ein zweites Einfaßteil 27, welches in den Fig. 10-12 dargestellt ist. Auch dieses Einfaßteil 27 besitzt einen federnd nachgiebigen Halterand 28 und eine Durchbrechung 29 sowie Verbindungsmittel 30, die mit den Verbindungsmitteln 26 des ersten Einfaßteils 23 zusammenarbeiten bzw. miteinander in Wirkverbindung treten. Es ist vorstellbar, wie je ein erstes Einfaßteil 23 und ein zweites Einfaßteil 27 durch eine Durchbrechung 22 im Autoteppich 21 von entgegengesetzten Seiten hindurchgesteckt und druckknopfartig miteinander verrastet werden können. Damit wird die Befestigungsstelle im Autoteppich 21 verstärkt. Gleichzeitig verschwinden Ungleichmäßigkeiten, die beim Ausschneiden der Durchbrechung 22 entstanden sein mögen. In Fig. 13 sind in vereinfachter Darstellung, d. h. ohne vollständige Darstellung des Fixierelementes 1 sowie des Autoteppichs zwei Halbschnitte durch die Komplette Befestigungseinrichtung dargestellt. Die Halbschnitte zeigen die verschiedenen Relativlagen der Teile zueinander.

Bezugszeichenliste

1 = Fixierelement
2 = Vertikalachse
3 = Zapfen
4 = Kragen
5 = Einschraubflügel
6 = Anschnitt
7 = Spitze
8 = Widerhaken
9 = Verankerungsrand
10 = Öffnung
11 = Verschlußteil
12 = Abdeckkragen
13 = Fortsatz
14 = Verbreiterung
15 = Schlitz
16 = Mittelbereich
17 = Rippe
18 = Bodenblech
19 = Isoliermaterial
20 = Bodenbelag
21 = Autoteppich
22 = Durchbrechung
23 = erstes Einfaßteil
24 = Durchbrechung
25 = Halterand
26 = Verbindungsmittel
27 = zweites Einfaßteil
28 = Halterand
29 = Durchbrechung
30 = Verbindungsmittel

**Patentansprüche**

1. Befestigungseinrichtung für Autoteppiche, Fußmatten oder dgl. in Kraftfahrzeugen, mit einem in einem Bodenbelag (20) zu verankernden Fixierelement (1), welches einen zentral angeordneten und mit einer Hinterschneidung versehenen Zapfen (3) aufweist, und mit einem drehbaren Verschlußteil (11), welches einen Fortsatz (13) aufweist, der mit der Hinterschneidung des Zapfens (3) des Fixierelementes (1) zusammenwirkt, dadurch gekennzeichnet, daß das Fixierelement (1) aus einem dünnwandigen Blechformteil besteht, welches mindestens zwei mit Widerhaken (8) besetzte Einschraubflügel (5) und am Zapfen (3) eine schlitzartige Öffnung (10) für den Fortsatz (13) aufweist, und daß der Verschlußteil (11) vermittels des knebelartig ausgebildeten Fortsatzes (13) mit dem Fixierelement (1) verbindbar und von diesem lösbar ausgebildet ist.

2. Befestigungseinrichtung nach Anspruch 1, dadurch gekennzeichnet, daß das Fixierelement (1) im Anschluß an den Zapfen (3) einen abstehenden Kragen (4) aufweist, an dem die Einschraubflügel (5) eingeschnitten und aus der Ebene des Kragens (4) nach der dem Zapfen (3) abgekehrten Seite abgebogen angeordnet sind.

3. Befestigungseinrichtung nach Anspruch 1 und 2, dadurch gekennzeichnet, daß die Einschraubflügel (5) sichelförmige, in Einschraubrichtung spitzzulaufende Form aufweisen und das die Widerhaken (8) aus der Ebene der Einschraubflügel (5) abgebogen sind.

4. Befestigungseinrichtung nach Anspruch 1-3, dadurch gekennzeichnet, daß der Zapfen (3) des Fixierelementes (1) auf seiner Oberseite einen parallel zum Kragen (4) angeordneten Verankerungsrand (9) aufweist, in dem die schlitzartige Öffnung (10) angeordnet ist.

5. Befestigungseinrichtung nach Anspruch 1, dadurch gekennzeichnet, daß der Verschlußteil (11) einen Abdeckkragen (12) aufweist, der kreisförmig begrenzt ist und dessen Durchmesser etwa dem Durchmesser des Kragens (4) des Fixierelementes (1) entspricht.

6. Befestigungseinrichtung nach Anspruch 1 und 5, dadurch gekennzeichnet, daß der Verschlußteil (11) im Mittelbereich (16) seines Abdeckkragens (12) verdickt ausgebildet ist und dort ein Schlitz (15) oder eine Rippe (17) vorgesehen sind.

7. Befestigungseinrichtung nach Anspruch 5 und 6, dadurch gekennzeichnet, daß der Abdeckkragen (12) hutförmig eingewölbt und federnd nachgiebig ausgebildet ist.

8. Befestigungseinrichtung nach Anspruch 1, dadurch gekennzeichnet, daß zwischen dem Fixierelement (1) und dem Verschlußteil (11) zwei druckknopfartig miteinander verrastbare Einfaßteile (23, 27) vorgesehen sind, die zwischen sich den Autoteppich (21) oder die Fußmatte aufnehmen und zentrisch mit einer Durchbrechung (24, 29) für den Zapfen (3) des Fixierelementes (1) und den Fortsatz (13) des Verschlußteils (11) versehen sind.

9. Befestigungseinrichtung nach Anspruch 8, dadurch gekennzeichnet, daß die Einfaßteile (23, 27) federnd nachgiebige Halteränder (25, 28) aufweisen.

10. Befestigungseinrichtung nach Anspruch 8 und 9, dadurch gekennzeichnet, daß die Einfaßteile (23, 27) als Kunststoffspritzteile ausgebildet sind.

## Claims

1. Fastening equipment for car carpets, floor mats or the like in motor vehicles, with a fixing element (1), which is to be anchored in the floor covering (20) and displays a centrally arranged spigot (3) provided with an undercut portion, and with a rotatable fastener part (11), which displays a projection (13), which co-operates with the undercut portion of the spigot (3) of the fixing element (1), characterised thereby, that the fixing element (1) consists of a thinwalled shaped sheet metal part which displays at least two screw-in blades (5) occupied by barbs (8) and a slot-like opening (10) for the projection (13) at the spigot (3) and that the fastener part (11) is, by virtue of the projection (13) being constructed in the shape of a clamp handle, constructed to be connectible with and detachable from this.

2. Fastening equipment according to claim 1, characterised thereby, that the fixing element (1) adjacent the spigot (3) displays a projecting collar (4), at which the screw-in blades (5) are indented and arranged bent away out of the plane of the collar (4) towards the side remote from the spigot (3).

3. Fastening equipment according to claim 1 and 2, characterised thereby, that the screw-in blades (5) display the shape of a sickle converging to a point in the direction fo screwing-in and that the barbs (8) are arranged bent away out of the plane of the screw-in blades (5).

4. Fastening equipment according to claim 1 to 3, characterised thereby, that the spigot (3) of the fixing element (1) on its upper side displays an anchoring rim (9), which is arranged parallelly to the colar (4) and in which the slot-like opening (10) is arranged.

5. Fastening equipment according to claim 1, characterised thereby, that the fastener part (11) displays a concealing collar (12), which is bounded in circular shape and the diameter of which about corresponds to the diameter of the collar (4) of the fixing element (1).

6. Fastening equipment according to claim 1 and 5, characterised thereby, that the fastener part (11) is constructed to be thickened in the middle region of its concealing collar (12) and a slot (15) or a rib (17) is provided there.

7. Fastening equipment according to claim 5 and 6, characterised thereby, that the concealing collar (12) is domed inwardly in the shape of a hat and constructed to be yielding resiliently.

8. Fastening equipment according to claim 1, characterised thereby, that two binding parts (23, 27), which are each detentable with the other in the manner of a press-stud, between them receive the car carpet (21) or the floor mat and which are centrally provided with a passage (24, 29) for the spigot (3) of the fixing element (1) and the projection (13) of the fastener part (11), are provided between the fixing element (1) and the fastener part (11).

9. Fastening equipment according to claim 8, characterised thereby, that the binding parts (23, 27) display resiliently yielding retaining rims (25, 28).

10. Fastening equipment according to claim 8 and 9, characterised thereby, that the binding parts (23, 27) are constructed as injection-moulded synthetic material parts.

## Revendications

1. Dispositif de fixation pour tapis de voitures, tapis de plancher ou analogues dans des véhicules automobiles, comportant un élément de fixation (1), qui doit être ancré dans le revêtement de sol (20) et présente un bouton central (3) à talon, ce dispositif comportant aussi une pièce de fermeture (11) tournante, présentant un prolongement (13), qui coopère avec le talon du bouton (3) de l'élément de fixation (1), caractérisé en ce que l'élément de fixation (1) est constitué par une pièce moulée en tôle à paroi mince, qui présente au moins deux ailettes de vissage (5), munies de crochets (8), ainsi que, sur le bouton (3), une ouverture (10) en forme de fente pour le prolongement (3), et en ce que la pièce de fermeture (11) peut être réunie à l'élément de fixation (1) et en être séparée, au moyen du prolongement (13) en forme de clé.

2. Dispositif de fixation suivant la revendication 1, caractérisé en ce que l'élément de fixation (1) présente un collet écarté (4), qui se raccorde au bouton (3), les ailettes de vissage (5) étant taillées dans le collet et étant coudées à partir du plan du collet (4), vers le côté opposé au collet (3).

3. Dispositif de fixation suivant les revendications 1 et 2, caractérisé en ce que les ailettes de vissage (5) sont en forme d'un croissant dont la pointe se rétrécit dans le sens du vissage et que les crochets (8) sont coudés à partir du plan des ailettes de vissage (5).

4. Dispositif de fixation suivant les revendications 1 à 3, caractérisé en ce que le bouton (3) de l'élément de fixation (1) présente sur le dessus un bord d'ancrage (9), qui est parallèle au collet (4) et comporte l'ouverture (10) en fente.

5. Dispositif de fixation suivant la revendication 1, caractérisé en ce que la pièce de fermeture (11) présente un collet de recouvrement (12), qui est limité circulairement et dont le diamètre correspond approximativement à celui du collet (4) de l'élément de fixation (1).

6. Dispositif de fixation suivant les revendications 1 et 5, caractérisé en ce que la pièce de fermeture (11) est épaissie dans la zone médiane (16) de son collet de recouvrement (12) et qu'il y est prévu une fente (15) ou une nervure (17).

7. Dispositif de fixation suivant les revendications 5 et 6, caractérisé en ce que le collet de recouvrement (12) est voûté en forme de chapeau et élastique.

8. Dispositif de fixation suivant la revendication 1, caractérisé en ce qu'entre l'élément de fixation (1) et la pièce de fermeture (11) on prévoit deux pièces de saisie (23, 27), à encrantement réciproque à la manière d'un bouton-pression, ces pièces recevant entre elles le tapis de voiture (21) ou de plancher et étant munies centralement d'une ouverture (24, 29) pour le bouton (3) de l'élément de fixation (1) et le prolongement (13) de la pièce de fermeture (11).

9. Dispositif de fixation suivant la revendication 8, caractérisé en ce que les pièces de saisie (23, 27) présentent des bords élastiques (25, 28) de maintien.

10. Dispositif de fixation suivant les revendications 8 et 9, caractérisé en ce que les pièces de saisie (23, 27) sont des pièces injectées en matière plastique.

Fig.1

Fig. 2

Fig. 4

Fig. 3

Fig. 5

Fig. 6

0 188 639

Fig. 8

Fig. 7

Fig. 9

29 27

30 28

Fig. 11

→XII

27

27

30

XI XI

29

29

28

28

→XII

Fig. 12

Fig. 10

4

Fig. 13